# EUROPÄISCHE PATENTSCHRIFT

(11) **EP 1 669 384 B1**
(45) Veröffentlichungstag und Bekanntmachung des Hinweises auf die Patenterteilung: **02.09.2009**
(21) Anmeldenummer: 05024748.5
(22) Anmeldetag: 12.11.2005
(51) Int. Cl.: C08G 18/32, C09D 175/04, C07D 493/08, C08G 18/79, C08G 18/77, C07D 317/34, C07D 319/06

(54) **BOE- und/oder Polyorthoestergruppenhaltige Bindemittelgemische**
Mixtures of binders which contain bicycloorthoester and/or polyorthoester groups
Mélanges de liants qui contiennent des groupes bicycloorthoester et/ou polyorthoester

(30) Priorität: 26.11.2004 DE 102004057224
(43) Veröffentlichungstag der Anmeldung: 14.06.2006
(73) Patentinhaber: Bayer MaterialScience AG, 51368 Leverkusen (DE)
(72) Erfinder: Mundstock, Holger, 42929 Wermelskirchen (DE); Niesten, Meike, Dr., 51061 Köln (DE); Schmitz, Jörg, Dr., 51065 Köln (DE)

(56) Entgegenhaltungen:
- EP-A- 1 225 172
- WO-A-01/88006
- WO-A-02/44234
- GB-A- 1 086 540

## Beschreibung

Die vorliegende Erfindung betrifft neue Bindemittelgemische basierend auf CAPS-modifizierten Polyisocyanaten und Verbindungen, die Bicycloorthoester- (BOE) und/oder Polyorthoestergruppen enthalten.

Die Verwendung von polyorthoester- und/oder bicycloorthoestergruppen-enthaltenden Verbindungen als latente Polyole ist in der Polyurethanchemie beispielsweise aus EP-A 0 882 106, EP-A 1 225 172 und der nicht vorveröffentlichten Anmeldung DE 10 200 400 34 95 bekannt. Darin werden Systeme beschrieben, in denen NCO- und Polyorthoester- und/oder Bicycloorthoestergruppen in einem Molekül (1K-Systeme) oder aber in getrennten Komponenten (2K-Systemen) eingesetzt werden.

Unter Einfluss von Luftfeuchtigkeit deblockieren die Polyorthoester- bzw. BicycloorthoesterGruppen durch hydrolytische Spaltung, wobei Hydroxylgruppen freigesetzt werden, die anschlie-βend unter Vernetzung mit den NCO-Gruppen reagieren. Um eine möglichst schnelle Aushärtung solcher Systeme zu erreichen, werden typischerweise Säurekatalysatoren zugesetzt, die die Deblockierung beschleunigen.

Die aus solchen Systemen erhältlichen Beschichtungen zeichnen sich durch schnelle Trocknung, hohe Härte und gute Chemikalienbeständigkeit aus, so dass sie gut für die Autoreparaturlackierung geeignet sind. Nachteilig jedoch ist, dass solche Formulierungen durch die Anwesenheit des Säurekatalysators relativ empfindlich gegenüber Feuchtigkeit sind und daher nur eine begrenzte Lagerfähigkeit besitzen. Ferner weisen diese Lacksysteme nur eine eingeschränkte Applikationssicherheit auf, die sich je nach Umgebungsbedingungen (relative Luftfeuchtigkeit, Temperatur) durch Blasenbildung und/oder Trübung der ausgehärteten Filme äußert.

Eine getrennte Formulierung ohne den Säurekatalysator verbessert zwar die Stabilität, ist aber aufgrund des erhöhten Aufwands bei der Herstellung der applikationsfertigen Beschichtungsmittel mit erhöhtem Aufwand verbunden.

Aufgabe der Erfindung was es daher einen Weg zu finden, die vorstehend beschriebenen Systeme derart zu optimieren, dass keine getrennte Zugabe des Säurekatalysators mehr notwendig ist und die Systeme ohne Verlust an Lagerstabilität trotzdem zu Beschichtungsmitteln mit schneller Aushärtung bei gleichzeitig guter Chemikalienbeständigkeit und hoher Härte der daraus erhältlichen Beschichtungen formuliert werden können.

Die Aufgabe konnte nun durch die Verwendung spezieller sulfonatgruppenmodifizierter Polyisocyanate gelöst werden.

Gegenstand der Erfindung sind Zusammensetzungen, die auf sulfonatgruppenhaltigen Polyisocyanaten basieren und gleichzeitig Polyorthoester- und/oder Blcycloorthoestergruppen enthalten, die entweder in an diese sufonatgruppenhaltigen Polyisocyanate gebundener Form oder getrennt davon als Teil weiterer in den Zusammensetzungen enthaltener Verbindungen vorliegen.

Polyorthoesterstrukturen werden typischerweise dann erhalten, wenn acyclische Orthoester mit polyfunktionellen Alkoholen unter Umesterungsbedingungen zur Reaktion gebracht werden, wobei die Anzahl der OH-Gruppen der Alkoholkomponente dabei so bemessen ist, dass alle Estergruppen des acyclischen Orthoesters umgeestert werden. Ihre genaue Struktur ist in erster Linie abhängig von der Funktionalität der eingesetzten Alkohole und kann unter anderem cyclisch oder auch spiroartig sein. Ein besonderer Fall eines solchen Reaktionsproduktes sind die Bicycloorthoesterstrukturen, in denen ein Molekül acyclischer Orthoester unter Umesterung mit einem wenigstens trifunktionellen Alkohol wie Trimethylolpropan oder Pentaerythrit umgeestert wird, wobei stets definierte Verbindungen bzw. Strukturen der Formel (I) entstehen, 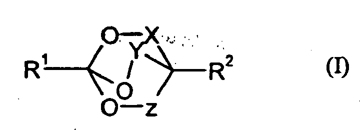 worin die Variablen X, Y, Z sowie R¹ und R² eine vom eingesetzten Orthoester bzw. polyfunktionellen Alkohol abhängige Bedeutung haben. Typischerweise sind X und Z unabhängig voneinander lineare oder verzweigte Alk(en)ylengruppen mit 1 bis 4 Kohlenstoffatomen, die gegebenenfalls ein Sauerstoff oder ein Stickstoffatom enthalten. Y kann die gleiche Bedeutung haben wie X und Z oder aber auch für keine Struktur stehen. R¹ und R² sind typischerweise gleich oder verschieden und entsprechen einwertigen Resten ausgewählt aus der Gruppe bestehend aus Wasserstoff, Hydroxygruppe und linearen oder verzweigten Alk(en)ylgruppen mit 1 bis 30 Kohlenstoffatomen, die gegebenenfalls ein oder mehrere Heteroatome enthalten.

Insbesondere, wenn die erfindungsgemäßen Zusammensetzungen polyorthoestergruppenhaltig sind, haben diese bevorzugt ein zahlenmittleres Molekulargewicht Mₙ von 500 bis 3 000 g/mol, besonders bevorzugt 500 bis 2 200 g/mol.

Ein weiterer Gegenstand der vorliegenden Erfindung ist ein Verfahren zur Herstellung erfindungsgemäßer Zusammensetzungen, bei dem zunächst
A) OH-funktionelle Polyorthoester durch Umsetzung von
   A1) einem oder mehreren acyclischen Orthoestern mit
   A2) niedermolekularen Polyolen einer Funktionalität von 4 bis 8 und einem zahlenmittleren Molekulargewicht von 80 bis 500 g/mol und
   A3) gegebenenfalls einem 1,3 Diol und/oder einem Triol, wobei die Hydroxylgruppen durch mindestens 3 Kohlenstoffatome voneinander getrennt sind,
      gegebenenfalls in Anwesenheit von
   A4) Katalysatoren
   hergestellt wird und diese dann entweder
B) mit mindestens einem sulfonatgruppenhaltigen Polyisocyanat umgesetzt werden oder
C) mit mindestens einem sulfonatgruppenfreien Polyisocyanat umgesetzt werden und das dabei entstehende Reaktionsgemisch anschließend mit mindestens einem sulfonatgruppenhaltigen Polyisocyanat vermischt wird.

Darüber hinaus ist ein weiterer Gegenstand der vorliegenden Erfindung ist ein Verfahren zur Herstellung erfindungsgemäßer Zusammensetzungen, bei dem zunächst
a) Bicycloorthoester durch Umsetzung von
   a1) einem oder mehreren acyclischen Orthoestern mit
   a2) niedermolekularen Polyolen einer OH-Funktionalität von 3 oder 4 und einem zahlenmittleren Molekulargewicht von 80 bis 500 g/mol
      gegebenenfalls in Anwesenheit von
   a3) Katalysatoren
   hergestellt werden und diese dann entweder
b) mit mindestens einem sulfonatgruppenhaltigen Polyisocyanat umgesetzt oder vermischt werden oder
c) mit mindestens einem sulfonatgruppenfreien Polyisocyanat umgesetzt oder vermischt werden bevor sie mit mindestens einem sulfonatgruppenhaltigen Polyisocyanat vermischt werden.

Bei den nach a) erhaltenen bicycloorthoestergruppenhaltigen Verbindungen können, je nach OH-Funktionalität der Verbindungen aus a2), sowohl OH-gruppenfreie als auch OH-gruppenhaltige bicyclische Orthoester erhalten werden. Je nach dem, erfolgt in b) bzw. c) dann eine Reaktion zwischen freien OH-Gruppen und NCO-Gruppen oder aber nur eine physikalische Abmischung von den OH-gruppenfreien Bicycloorthoestem und des Polyisocyanaten. Welcher Fall nun im Einzelnen eintritt ist für den Fachmann leicht anhand der gewählten Stöchiometrie und OH-Funktionalität bestimmbar.

Neben der vorstehend beschriebenen Route können OH-gruppenfreie bicyclische Orthoester auch durch Umwandlung der entsprechenden esterfunktionellen Oxetanverbindungen mit BF₃Et₂O erhalten werden, wie z.B. in EP-A 0 882 106 beschrieben.

Die in B) und b) bzw. C) und c) eingesetzten sulfonatgruppenhaltigen Polyisocyanate haben bevorzugt eine mittlere Isocyanatfünktiönälität von mindestens 1,8, einen Gehalt an Isocyanatgruppen (berechnet als NCO; Molekulargewicht = 42) von 4,0 bis 26,0 Gew.-%, einem Gehalt an gebundenen Sulfonsäure und Sulfonatgruppen (berechnet als SO₃⁻; Molekulargewicht = 80) von 0,1 bis 7,7 Gew.-% und einem Gehalt an innerhalb von Polyetherketten gebundenen Ethylenoxideinheiten (berechnet als C₂H₂O; Molekulargewicht = 44) von 0 bis 19,5 Gew.-% bezogen auf den zugrunde liegenden Polyether.

Falls die vorstehend beschriebenen Polyisocyanate Polyetherketten aufweisen, enthalten diese bevorzugt im statistischen Mittel 5 bis 35 Ethylenoxideinheiten.

Die Sulfonatgruppen haben dabei als Gegenion bevorzugt ein aus tertiären Aminen durch Protonierung gebildetes Ammoniumion. Das Verhältnis der Summe aus Sulfonsäuregruppen und Sulfonatgruppen zur Summe aus tertiärem Amin und dem davon abgeleiteten protonierten Ammoniumion beträgt typischerweise 0,2 bis 2,0.

Beispiele der tertiäre Amine sind Monoamine, wie z.B. Trimethylamin, Triethylamin, Tripropylamin, Tributylamin, Dimethylcyclohexylamin, N-Methylmorpholin, N-Ethylmorpholin, N-Methylpiperidin, N-Ethylpiperidin, oder um tertiäre Diamine, wie z.B. 1,3-Bis-(dimethylamino)-propan, 1,4-Bis-(dimethylamino)-butan oder N,N'-Dimethylpiperazin. Geeignete, jedoch weniger bevorzugte Neutralisationsamine sind aber auch gegenüber Isocyanaten reaktive Gruppen tragende tertiäre Amine, beispielsweise Alkanolamine, wie z.B. Dimethylethanolamin, Methyldiethanolamin oder Triethanolamin. Bevorzugt ist Dimethylcyclohexylamin.

Die Herstellung solcher modifizierten Polyisocyanate ist in WO-A 01-88006 im Detail beschrieben. Diese basieren auf organischen Polyisocyanaten bevorzugt mit einer mittleren NCO-Funktionalität von mindestens 2 und einem Molekulargewicht von mindestens 140 g/mol in Frage. Gut geeignet sind vor allem (i) unmodifizierte organische Polyisocyanate des Molekulargewichtsbereichs 140 bis 300 g/mol, (ii) Lackpolyisocyanate eines Molekulargewichts im Bereich von 300 bis 1000 g/mol sowie (iii) Urethangruppen-aufweisende NCO-Prepolymere eines über 1000 g/mol liegenden Molekulargewichtes oder Gemische aus (i) bis (iii).

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethyl-cyclohexan (IPDI), 1-Isocyanato-1-methyl-4-(3)-isocyanatomethyl-cyclohexan, Bis-(4-isocyanatocyclohexyl)methan, 1, 10-Diisocyanatodecan, 1,12-Diisocyanato-dodecan, Cyclohexan-1,3- und -1,4-diisocyanat, Xylylendiisocyanat-Isomere, Triisocyanatononan (TIN), 2,4-Diisocyanatotoluol oder dessen Gemische mit 2,6-Diisocyanatotoluol mit bevorzugt, bezogen auf Gemische, bis zu 35 Gew.-% 2,6-Diisocyanatotoluol, 2,2'-, 2,4'-, 4,4'-, Diisocyanatodiphenylmethan oder technische Polyisocyanatgemische der Diphenylmethanreihe oder beliebige Gemische der genannten Isocyanate.

Polyisocyanate der Gruppe (ii) sind die an sich bekannten Lackpolyisocyanate. Unter dem Begriff "Lackpolyisocyanate" sind im Rahmen der Erfindung Verbindungen oder Gemische von Verbindungen zu verstehen, die durch an sich bekannte Oligomerisierungsreaktion von einfachen Diisocyanaten der unter (i) beispielhaft genannten Art erhalten werden. Geeignete Oligomerisierungsreaktionen sind z.B. die Carbodiimidisierung, Dimerisierung, Trimersisierung, Biuretisierung, Harnstoffbildung, Urethanisierung, Allophanatisierung und/oder Cyclisierung unter Ausbildung von Oxadiazinstrukturen. Oftmals laufen bei der "Oligomerisierung" mehrere der genannten Reaktionen gleichzeitig oder nacheinander ab.

Bevorzugt handelt es sich bei den "Lackpolyisocyanaten" (ii) um Biuretpolyisocyanate, Isocyanuratgrupen-aufweisende Polyisocyanate, Isocyanurat- und Uretdiongruppen-aufweisende Polyisocyanatgemische, Urethan- und/oder Allophanatgruppen-aufweisende Polyisocyanate oder um Isocyanurat- und Allophanatgruppen-aufweisende Polyisocyanatgemische auf Basis einfacher Diisocyanate.

Die Herstellung von derartigen Lackpolyisocyanaten ist bekannt und beispielweise in der DE-A 1 595 273, DE-A 3 700 209 und DE-A 3 900 053 oder in der EP-A-0 330 966, EP-A 0 259 233, EP-A- 0 377 177, EP-A-0 496 208, EP-A-0 524 501 oder US-A 4 385 171 beschrieben.

Polyisocyanate der Gruppe (iii) sind die an sich bekannten Isocyanatgruppen aufweisenden Prepolymere auf Basis von einfachen Diisocyanaten der oben beispielhaft genannten Art und/oder auf Basis von Lackpolyisocyanaten (ii) einerseits und organischen Polyhydroxyverbindungen eines über 300 g/mol liegenden Molekulargewichts andererseits. Während es sich bei den Urethangruppen-aufweisenden Lackpolyisocyanaten der Gruppe (ii) um Derivate von niedermolekularen Polyolen des Molekulargewichtsbereichs 62 bis 300 g/mol handelt, geeignete Polyole sind beispielsweise Ethylenglykol, Propylenglykol, Trimethylolpropan, Glycerin oder Gemische dieser Alkohole, werden zur Herstellung der NCO-Prepolymeren der Gruppe (iii) Polyhydroxylverbindungen eines über 300 g/mol, bevorzugt über 500 g/mol, besonders bevorzugt eines zwischen 500 und 8 000 g/mol liegenden Molekulargewichts eingesetzt. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpoloyolen und Gemischen aus derartigen Polyolen ausgewählt sind.

Bei der Herstellung der NCO-Prepolymeren (iii) können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten (ii) und höhermolekularen NCO-Prepolymeren (iii) resultieren, die ebenfalls als erfindungsgemäße Ausgangskomponente (C) geeignet sind.

Zur Herstellung der NCO-Prepolymeren (iii) oder deren Gemische mit den Lackpolyisocyanaten (ii) werden Diisocyanate (i) der oben beispielhaft genannten Art oder Lackpolyisocynatate der unter (ii) beispielhaft genannten Art mit den höhermolekularen Hydroxylverbindungen oder deren Gemischen mit niedermolekularen Polyhydroxylverbindungen der beispielhaft genannten Art unter Einhaltung eines NCO/OH Äquivalentverhältnisses von 1,1:1 bis 40:1, bevorzugt 2:1 bis 25:1 unter Urethanbildung umgesetzt. Gegebenenfalls kann bei Verwendung eines Überschusses an destillierbarem Ausgangsdiisocyanat dieser im Anschluss an die Umsetzung destillativ entfernt werden, so dass monomerenfreie NCO-Prepolymere, d.h. Gemische aus Ausgangsdiisocyanaten (i) und echten NCO-Prepolymeren (iii) vorliegen.

Bei der Herstellung der NCO-Prepolymeren (iii) können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten (ii) und höhermolekularen NCO-Prepolymeren (iii) resultieren.

Zur Herstellung dieser sulfonatmodifizierten Polyisocyanate werden die vorstehend beschriebenen Basisisocyanate gegebenenfalls mit difunktionellen Polyethem unter partieller Urethanisierung der NCO-Gruppen umgesetzt und dann mit Verbindungen, die neben wenigstens einer Sulfonsäure bzw. Sulfonatgruppe auch eine gegenüber NCO-Gruppen reaktive Funktion wie eine OH- oder NH-Gruppe aufweisen, zur Reaktion gebracht. Bevorzugt sind dies 2-(Cyclohexylamino)-ethansulfonsäure und/oder 3-(Cyclohexylamino)-propansulfonsäure. Nach dem Polymeraufbau werden die Sulfonsäuregruppen ganz oder teilweise durch Zugabe einer Base, die bevorzugt ein tertiäres Amin ist, deprotoniert.

Besonders bevorzugt basieren die als Basisisocyanate verwandten Polyisocyanate auf Hexamethylendiisocyanat, Isophorondiisocyanat und/oder 4,4'-Dicyclohexylmethandiisocyanat.

Die in C) bzw. c) eingesetzten sulfonatgruppenfreien Polyisocyanate entsprechen den bei der Herstellung der sulfonatgruppenhaltigen Polyisocyanate eingesetzten Basisisocyanate.

In Komponente A1) bzw. a1) können beispielsweise Orthoameisensäuretriethylester, Orthoameisensäuretriisopropylester, Orthoameisensäuretripropylester, Orthobuttersäuretrimethylester, Orthoessigsäuretriethylester, Orthoessigsäuretrimethylester, Orthopropionsäuretriethylester, Orthovaleriansäuretrimethylester eingesetzt werden. Bevorzugt ist die Verwendung von Orthoameisensäuretriethylester, Orthoessigsäuretriethylester, Orthoessigsäuretrimethylester und/oder Orthopropionsäuretriethylester, besonders bevorzugt sind Orthoessigsäuretriethylester und Orthopropionsäuretriethylester.

Beispielhaft seien als Verbindungen der Komponente A2) Pentaerythrit, Di-Trimethylolpropan, Erythritol, Diglycerid, Di-Pentaerythritol, Mannit oder Methylglykosid genannt. Bevorzugt wird in A2) Pentaerythrit eingesetzt.

Als Polyole können in a2) Glycerin, Trimethylolpropan, 1,2,3-Propantriol, 1,2,4-Butantriol, 1,1,1-Trimethylolethan, 1,2,6-Hexantriol, 1,1,1-Trimethylolpropan und polyesterbasierende Triole mit einem zahlenmittleren Molekulargewicht von 100 bis 1000 g/mol eingesetzt werden. Letztere können beispielsweise aus den vorstehend genannten Triolen durch Reaktion mit Lactonen, wie ε-Caprolacton, β-Propiolacton, γ-Butyrolacton, γ- und δ-Valerolacton, 3,5,5- und 3,3,5-Trimethylcaprolacton oder beliebigen Gemischen solcher Lactone, hergestellt werden. Ferner können in a2) Pentaerythrit, Di-Trimethylolpropan, Erythritol und Diglycerid eingesetzt werden. Bevorzugt werden in a2) Trimethylolpropan und Pentaerythrit eingesetzt.

Beispiele für (solche) Diole der Komponente A3) sind Neopentylglykol, 2-Methyl-1,3-propandiol, 2-Methyl-2,4-pentandiol, 3-Methyl-1,3-Butandiol, 2-Ethyl-1,3-hexandiol, 2,2-Diethyl-1,3-propandiol, 2,2,4-Trimethyl-1,3-pentandiol, 2-Butyl-2-ethyl-1,3-propandiol, 2-Phenoxypropan-1,3-diol, 2-Methyl-2-phenylpropan-1,3-diol, 1,3-Propylenglykol, 1,3-Butylenglykol, Dimethylolpropionsäure, Dimethylolbutansäure, 2-Ethyl-1,3-oktandiol und 1,3-Dihydroxycyclohexan; Fettsäuremonoglycerid (β- Produkte) wie zum Beispiel Glycerin-monoacetat (β- Produkt) und Glycerin-monostearat (β- Produkt). Bevorzugt sind Neopentylglykol, 2-Methyl-1,3-propandiol, 2-Methyl-2,4-pentandiol, 3-Methyl-1,3-butandiol, 2-Ethyl-1,3-Hexandiol, 2,2-Diethyl-1,3-propandiol, 2,2,4-Trimethyl-1,3-pentandiol und 2-Butyl-2-ethyl-1,3-propandiol.

Beispiele für Triole der Komponente A3) sind 1,2,3-Propantriol, 1,2,4-Butantriol, 1,1,1-Trimethylolethan, 1,2,6-Hexantriol, 1,1,1-Trimethylolpropan und polyester-basierende Triole mit einem zahlenmittleren Molekulargewicht von 100 bis 1000 g/mol. Letztere können beispielsweise aus den vorstehend genannten Triolen durch Reaktion mit Lactonen, wie ε-Caprolacton, β-Propiolacton, γ-Butyrolacton, γ- und 8-Valerolacton, 3,5,5- und 3,3,5-Trimethylcaprolacton oder beliebigen Gemischen solcher Lactone, hergestellt werden. Bevorzugtes Triol der Komponente A3) ist Trimethylolpropan.

Das Äquivalentverhältnis von umzuesternden Gruppen der Verbindungen der Komponente A1) zu den OH-Gruppen der Verbindungen der Komponenten A2) und gegebenenfalls A3) beträgt bevorzugt 1 : 1,1 bis 1 : 1,7 besonders bevorzugt 1 : 1,3 bis 1: 1,5

Um eine ausreichende Härte in dem Lack zu erreichen, beträgt dass Äquivalentverhältnis von OH-Gruppen aus A2) zu denen aus A3) bevorzugt 1 : 0 bis 1 : 7, besonders bevorzugt 1 : 0 bis 1 : 4.

Das Äquivalentverhältnis von umzuesternden Gruppen der Verbindungen der Komponente a1) zu den OH-Gruppen der Verbindungen der Komponenten a2) bevorzugt 1:1 bis 1:1,7 besonders bevorzugt 1 : 1 bis 1 : 1,5.

Als Katalysatoren A4) bzw. a3) für die Umesterungsreaktion in Schritt A) bzw. a) können die dem Fachmann an sich bekannten Veresterungskatalysatoren, wie z.B. Säuren, Basen oder Übergangsmetallverbindungen, verwendet werden. Bevorzugt sind Lewis- oder Broenstedt-Säuren, besonders bevorzugt ist p-Toluolsulfonsäure.

Diese werden im erfindungsgemäßen Verfahren in Mengen von 0,001 bis 5 Gew.%, bevorzugt 0,01 bis 1 Gew.-% bezogen auf die Summe der Mengen der Komponenten A1) - A3) bzw. a1) und a2) verwendet.

Die Reaktionstemperatur der Umesterung in Schritt A) bzw. a) beträgt 50 bis 200°C, bevorzugt 75 bis 150 °C. In einer bevorzugten Ausführungsform der Erfindung wird der bei der Umesterung abgespaltene Alkolhol destillativ aus der Reaktionsmischung gegebenenfalls unter Anwendung von Vakuum entfernt. Auf diese Weise lässt sich neben der Gleichgewichtsverschiebung auch das Ende der Umesterungsreaktion leicht erkennen, da diese beendet ist, sobald kein Spaltprodukt (Alkohol) mehr überdestilliert.

Das Äquivalentverhältnis von NCO-reaktiven Gruppen des Polyorthoesters bzw. Bicycloorthoesters aus dem Umesterungsschritt A) bzw a) und NCO-Gruppen des sulfonatgruppenhaltigen Polyisocyanats in B) bzw. b) oder des sulffonatfreien Polyisocyanats aus C) bzw. c) beträgt bevorzugt 1:1-1: 40, besonders bevorzugt 1:1-1:10, ganz besonders bevorzugt 1:1-1: 3,2.

Die Umsetzung der isocyanatreaktiven Polyortho- bzw. Bicycloorthoesters mit den Polyisocyanaten erfolgt bevorzugt bei Temperaturen von 60 - 150°C, bevorzugt 80 - 130°C.

Falls erforderlich können in Schritt B) bzw. b) die dem Fachmann an sich aus der Polyurethanchemie bekannten Katalysatoren zur Beschleunigung der NCO/OH-Reaktion eingesetzt werden. Derartige Katalysatoren sind beispielsweise Organometallverbindungen, Amine (z.B. tertiäre Amine) oder Metallverbindungen wie Bleioctoat, Quecksilbersuccinat, Zinnoctoat oder Dibutylzinndilaurat.

Falls diese mitverwendet werden, werden sie vorzugsweise in Mengen von 0,001 bis 5 Gew.-%, insbesondere 0,002 bis 2 Gew.-% Katalysator bezogen auf die Gesamtmenge von Polyorthoester und Polyisocyanat eingesetzt.

Sowohl die Umesterung als auch die Reaktion bzw. Mischungsherstellung von isocyanatreaktivem Polyortho- bzw- Bicycloorthoester mit dem Polyisocyanat kann in Gegenwart von Lösemitteln und/oder Hilfs- und Zusatzstoffen erfolgen.

Als Lösemittel sind beispielsweise geeignet Ester, wie z.B. Ethylacetat, Butylacetat, Methoxypropylacetat, Methylglykolacetat, Ethylglykolacetat, Diethylenglykolmonomethyletheracetat; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische.

Gegebenenfalls enthaltene Hilfsmittel oder Zusatzstoffe können z. B. oberflächenaktive Substanzen, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvin® 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.

Falls gewünscht können Viskositätseinstellungen durch die Zugabe von dem Fachmann aus der Lacktechnologie bekannten Lacklösemitteln erfolgen. In diesem Zusammenhang sind beispielhaft zu nennen: Ethylacetat, Butylacetat, Methoxypropylacetat, Methylglykolacetat, Ethylglykolacetat, Diethylenglykolmonomethyletheracetat; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische.

Eventuell nach Umsetzung von Polyorthoester mit Polyisocyanat noch enthaltene Restmonomere an Di- und/oder Triisocyanaten können falls gewünscht z.B. durch Destillation entfernt werden, so dass die nach dem erfindungsgemäßen Verfahren erhältlichen erfindungsgemäßen Polymere Restmonomergehalte an Di- und/oder Triisocyanaten von bevorzugt < 0,5 Gew.% enthalten.

Ein weiterer Gegenstand der Erfindung ist die Verwendung der erfindungsgemäßen Zusammensetzungen in Beschichtungsmitteln, Klebstoffen und/oder Dichtmassen.

Daher sind ein weiterer Gegenstand der Erfindung Beschichtungsmittel, mindestens enthaltend die erfindungsgemäßen Polymere.

Daneben können diese Beschichtungsmittel Katalysatoren und gegebenenfalls weitere Polyisocyanate und gegebenenfalls Hilf- und Zusatzstoffe enthalten.

Als gegebenenfalls zusätzliche Polyisocyanate kommen alle bereits vorstehend als Basisisocyanate bei der Herstellung der erfindungsgemäßen Zusammensetzungen beschriebenen Verbindungen in Frage.

Als Katalysatoren werden die dem Fachmann an sich bekannten Urethanisierungskatalysatoren eingesetzt. Dies können zum Beispiel tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat und Molybdänglykolat oder beliebige Gemische solcher Katalysatoren sein.

Der Katalysator wird bevorzugt in Mengen bezogen auf die Summe von erfindungsgemäßem Polymer und gegebenenfalls zusätzlichem Polyisocyanat von 0,001 bis 5 Gew.-%, bevorzugt 0,01 bis 1 Gew.-% eingesetzt.

Als Hilfs- und Zusatzstoffe können z. B. oberflächenaktive Substanzen, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvin® 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen eingesetzt werden.

Das Äquivalentverhältnis von latenten OH-Gruppen zu freien Isocyanatgruppen in den erfindungsgemäßen härtbaren Zusammensetzungen beträgt bevorzugt 0,5:1 bis 2,0:1, besonders bevorzugt 0,8:1 bis 1,5:1, ganz besonders bevorzugt 1:1.

Die erfindungsgemäßen härtbaren Zusammensetzungen können nach an sich bekannten Methoden wie beispielsweise durch spritzen, streichen, Fluten oder mit Hilfe von Walzen oder Rakeln auf beliebige Substrate aufgetragen werden.

Als Substrate eignen sich beispielsweise Metall, Holz, Glas, Stein, keramische Materialien, Beton, harte und flexible Kunststoffe, Textilien, Leder oder Papier.

### Beispiele:

Soweit nicht anders angegeben sind alle Prozentangaben als Gewichtsprozent zu verstehen.

Die dynamischen Viskositäten wurden bei 23°C mit einem Rotationsviskosimeter (ViscoTester® 550, Thermo Haake GmbH, D-76227 Karlsruhe) bestimmt.

Festkörpergehalt wurde nach DIN EN ISO 3251 bestimmt (1g Probe, Trocknungszeit im Umluftofen 1 Stunde bei 125°C).

Als Maß für die Verarbeitungszeit wurde die Auslaufzeit nach DIN 53211 bestimmt.

Die Trocknungsgeschwindigkeit wurde nach DIN 53150, DIN EN ISO 1517 bestimmt.

Die Pendelhärte nach König wurde nach DIN 53157 bestimmt (nach Trocknung 10 min 60°C und anschließend 7 Tage Raumtemperatur Lagerung)

Die Benzinbeständigkeit der so hergestellten Lackfilme wurde derart bestimmt, dass ein mit handelsüblichem Superbenzin getränkter Wattebausch für 1 bzw. 5 min. auf den applizierten Lackfilm gelegt wurde. Nach dieser Zeit wurde der Lackfilm mit einem Tuch trocken gewischt und in einer Abstufung von 0 bis 5 optisch beurteilt. (keine Veränderung, 5: starke Anquellung). Die jeweiligen Messwerte nach 10 Minuten Trocknung bei 60°C und anschließender Lagerung für 7 Tage bei Raumtemperatur sind in den untenstehenden Tabellen angegeben.

### Edukte:

MPA: Methoxypropylacetat
DBTL: Dibutylzinndilaurat
IPDI: Isophorondiisocyanat
Byk® 331 und 141: Verlaufshilfsmittel der Firma Byk Chemie, Wesel, DE
Polyisocyanat 1: Desmodur® N3600, HDI Trimerisat mit einem NCO-Gehalt von 23,0 % und einer Viskosität bei 23 °C von 1200 mPa·s, Bayer MaterialScience AG, Leverkusen, DE
Polyisocyanat 2: Desmodur® XP 2570, sulfonatgruppenhaltiges aliphatisches Polyisocyanat auf Basis von HDI mit einem NCO-Gehalt von 20,6 % und einer Viskosität bei 23°C von 3500 mPa·s, Bayer MaterialScience AG, Leverkusen, DE
Polyisocyanat 3: Desmodur® XP 2487/1, sulfonatgruppenhaltiges aliphatisches Polyisocyanat auf Basis von HDI mit einem NCO-Gehalt von 20,9 % und einer Viskosität bei 23°C von 6900 mPa·s, Bayer MaterialScience AG, Leverkusen, DE
Polyisocyanat 4: Desmodur® XP 2547, sulfonatgruppenhaltiges aliphatisches Polyisocyanat auf Basis von HDI mit einem NCO-Gehalt von 23 % und einer Viskosität von 600 mPa·s, Bayer MaterialScience AG, Leverkusen, DE
Polyisocyanat 5: Desmodur® XP 2410, asymmetrisches HDI Trimerisat mit einem NCO-Gehalt von 23,7 % und einer Viskosität bei 23°C von 700 mPa·s, Bayer MaterialScience AG, Leverkusen, DE
Polyisocyanat 6: 1:1 Mischung aus Polyisocyanat 4 und Polyisocyanat 5
Polyisocyanat 7: Desmodur® N3200, HDI-Biuret mit einem NCO-Gehalt von 23,0 % und einer Viskosität bei 23°C von 2 500 mPa·s, Bayer MaterialScience AG, Leverkusen, DE.
Polyisocyanat 8: Desmodur® N3390, HDI Trimerisat, 90 % in Butylacetat mit einem NCO-Gehalt von 19,6 % und einer Viskosität bei 23°C von 650 mPa·s, Bayer MaterialScience AG, Leverkusen, DE

### Beispiel 1: Herstellung eines Polyorthoesters

162 g Triethylenorthoacetat, 102 g Pentaerythrit und 80 g 2-Butyl-2-ethyl-1,3-propandiol wurden zusammen in einen Reaktor, der mit Rührer, Heizung, automatischer Temperatursteuerung, Stickstoffeinleitung, Destillierkolonne ausgerüstet war, eingewogen und unter Rühren und Durchleiten von Stickstoff auf 85°C aufgeheizt. Die Temperatur wurde langsam erhöht bis 120°C, wobei Ethanol abdestilliert wurde. Nach 6 Stunden war die Ethanol-Destillation beendet und ein Vakuum von 500 mbar bei 120°C wurde angelegt, um den Rest Ethanol abzudestillieren. Anschließend wurden 180 g Butylacetat zugegeben. Dann wurden bei 120°C 83,25 g IPDI zugetropft und die Reaktion bei 120°C weitergefahren bis die NCO-Bande bei 2280 cm⁻¹ im IR verschwunden war. Zum Schluss wurden noch 45,75 g Polyisocyanat 1 bei 120°C tropfend zugegeben und solange weitergerührt bis der theoretische NCO-Gehalt erreicht wurde.

### Beispiel 2: Herstellung eines bicyclischen Orthoesters

704 g Triethyleneorthopropionat, 536 g Trimethylolpropan und 1,2 g para-Toluolsulfonsäure wurden zusammen in einen Reaktor, der mit Rührer, Heizung, automatischer Temperatursteuerung, Stickstoffeinleitung, Destillierkolone ausgerüstet war, eingewogen und unter Rühren und Durchleiten von Stickstoff auf 85°C aufgeheizt. Die Temperatur wurde langsam bis auf 120°C erhöht, wobei Ethanol abdestilliert wurde. Nach 6 Stunden war die Ethanol-Destillation beendet und ein Vakuum von 500 mbar bei 120°C wurde angelegt, um den Rest Ethanol abzudestillieren. Zur Aufreinigung des bicyclischen Orthoesters wurde das Rohprodukt fraktioniert im Vakuum (10 mbar) destilliert. Bei einer Kopftemperatur von 87 bis 92°C wurden insgesamt 558 g (Ausbeute 84 %) der reinen Verbindung erhalten. Das Produkt war dünnflüssig und hat einen latenten OH-Gehalt von 19,8 Gew.-%.

### Lackherstellung

Das erfindungswesentliche Polymer aus Beispiel 1 bzw. der bicyclische Orthoester aus Beispiel 2 wurde gemäß Tabelle 1 mit handelsüblichen Lackadditiven, Katalysatoren (Komponente A) und sulfonatgruppenhaltigen Polyisocyanaten (Komponente B) als Zwei-Komponenten-System unter Rühren formuliert, anschließend mit einem 150 µm Rakel auf Glas appliziert und 10 min bei 60 °C ausgehärtet.

Für die Vergleichsbeispiele (Tabelle 2) wurde das erfindungswesentliche Polymer aus Beispiel 1 bzw. der bicyclische Orthoester aus Beispiel 2 mit handelsüblichen Lackadditiven, Katalysatoren (Komponente A), Dodecylbenzolsulfonsäure (Komponente B) und sulfonatgruppenfreien Polyisocyanaten (Komponente C) als drei Komponenten System unter Rühren versetzt, anschließend mit einem 150 µm Rakel auf Glas appliziert und 10 min bei 60°C ausgehärtet.

**Tabelle 1: Beschichtungszusammensetzung und anwendungstechnische Daten (Mengenangaben in Gewichtsteilen)**

| **Beispiel** | **3** | **4** | **5** | **6** | **7** | **8** | **9** | **10** |
|---|---|---|---|---|---|---|---|---|
| **Komponente A**: | | | | | | | | |
| Produkt aus Beispiel 1 | 39,86 | 41,27 | 44,40 | 42,06 | | | | |
| Produkt aus Beispiel 2 | | | | | 21,82 | 22,03 | 22,06 | 22,88 |
| Byk® 331 | 0,11 | 0,12 | 0,12 | 0,11 | 0,15 | 0,15 | 0,14 | 0,15 |
| Byk® 141 | 0,72 | 0,74 | 0,76 | 0,73 | 0,92 | 0,92 | 0,87 | 0,92 |
| DBTL 10% in Xylol | 1,15 | 1,19 | 1,22 | 1,17 | 1,47 | 1,47 | 1,39 | 1,47 |
| MPA/Xylol/BAl:1:1 | 26,62 | 24,50 | 21,61 | 24,97 | 23,86 | 23,89 | 23,93 | 24,07 |

| **Komponente B**: | | | | | | | | |
|---|---|---|---|---|---|---|---|---|
| Polyisocyanat 1 | | | | | | | | |
| Polyisocyanat 2 | 31,54 | | | | 51,79 | | | |
| Polyisocyanat 3 | | 32,19 | | | | 51,54 | | |
| Polyisocyanat 4 | | | 31,89 | | | | 51,61 | |
| Polyisocyanat 5 | | | | | | | | |
| Polyisocyanat 6 | | | | 30,96 | | | | 50,52 |
| Dodecylbenzolsulfonsäure | | | | | | | | |
| **Festkörper** | 57,7 | 59,2 | 61,0 | 58,5 | 73,9 | 73,8 | 73,9 | 73,7 |
| **Auslaufzeit** DIN4 (sec) nach | | | | | | | | |
| 0,0 h | 20 | 23 | 22 | 21 | 16 | 15 | 15 | 15 |
| 1,0 | 24 | 31 | 26 | 24 | 16 | 16 | 14 | 14 |
| 2,0 | 24 | 33 | 28 | 25 | 16 | 16 | 14 | 14 |
| 3,0 | 25 | 32 | 28 | 25 | 16 | 16 | 14 | 14 |
| 4,0 | 25 | 33 | 28 | 25 | 17 | 16 | 14 | 14 |
| **Trocknungszeit** 10 min 60°C | 0/0 | 0/0 | 0/0 | 0/0 | | | | |
| T1 +min | 0 | 0 | 0 | 0 | 60 | 60 | 180 | 120 |
| T3+h | 0 | 0,3 | 0,4 | 0,3 | 5,0 | 5,0 | >7,0 | >7,0 |
| T4+h | 2,0 | 2,0 | 3,5 | 3,5 | 7,0 | 7,0 | - | - |
| **Filmoptik** | klar | klar | klar | klar | klar | klar | klar | klar |
| **Pendelhärte** | 114 | 109 | 145 | 132 | 125 | 192 | 199 | 155 |
| **Benzinbeständigkeit** 1min / 5 min | 0/1 | 0/0 | 0/0 | 0/0 | 0/0 | 0/0 | 0/0 | 0/0 |

| | | | | | | | | |
|---|---|---|---|---|---|---|---|---|
| 0 = keine Veränderung, 5 = starke Anquellung | | | | | | | | |

**Tabelle 2: Beschichtungszusammensetzung und anwendungstechnische Daten der Vergleichsbeispiele (Mengenangaben in Gewichtsteilen)**

| **Beispiel** | **11** | **12** | **13** | **14** | **15** | **16** |
|---|---|---|---|---|---|---|
| **Komponente A**: | | | | | | |
| Produkt aus Beispiel 1 | 45,13 | 42,83 | 41,25 | | | |
| Produkt aus Beispiel 2 | | | | 23,61 | 23,17 | 21,19 |
| | | | | 0,14 | 0,15 | 0,14 |
| Byk® 141 | 0,75 | 0,73 | 0,72 | 0,90 | 0,91 | 0,86 |
| DBTL 10% in Xylol | 1,21 | 1,17 | 1,16 | 1,45 | 1,46 | 1,38 |
| MPA/Xylol/BA 1:1:1 | 19,5 | 22,67 | 20,38 | 23,99 | 23,9 | 22,5 |

| **Komponente B**: | | | | | | |
|---|---|---|---|---|---|---|
| Polyisocyanat 4 | | | | | | |
| Polyisocyanat 5 | 31,04 | | | 48,72 | | |
| Polyisocyanat 6 | | | | | | |
| Polyisocyanat 7 | | 30,35 | | | 49,26 | |
| Polyisocyanat 8 | | | 34,31 | | | 52,88 |

| **Komponente C**: | | | | | | |
|---|---|---|---|---|---|---|
| Dodecylbenzolsulfonsäure 10% in Xylol | 2,26 | 2,14 | 2,06 | 1,18 | 1,16 | 1,06 |
| **Festkörper** | 60,8 | 58,6 | 58,1 | 72,7 | 72,8 | 69,1 |
| **Auslaufzeit** DIN4 (sec) nach | | | | | | |
| 0,0 h | 21 | 22 | 21 | 15 | 18 | 15 |
| 1,0 | 25 | 34 | 28 | 14 | 18 | 15 |
| 2,0 | 26 | 35 | 29 | 14 | 18 | 14 |
| 3,0 | 27 | 35 | 30 | 14 | 18 | 14 |
| 4,0 | 28 | 35 | 32 | 14 | 18 | 14 |
| **Trocknungszeit** 10 min 60°C | 0/0 | 0/0 | 0/0 | | | |
| T1+min | 0 | 0 | 0 | 0 | 0 | 0 |
| T3+h | 0 | 0,3 | 1,0 | 0 | 0 | 0 |
| T4+h | 0 | 2,5 | 4,0 | 1,0 | 1,0 | 1,0 |
| **Filmoptik** | trübe | trübe | trübe | trübe | trübe | trübe |
| **Pendelhärte** | 99 | 76 | 120 | 13 | 11 | 11 |
| **Benzinbeständigkeit** 1min / 5 min | 0/0 | 0/1 | 0/0 | 0/0 | 1/1 | 0/0 |

| | | | | | | |
|---|---|---|---|---|---|---|
| 0 = keine Veränderung, 5 = starke Anquellung | | | | | | |

Die erfindungsgemäßen Lacke aus Tabelle 1 lassen sich als 2 K System applizieren und kennzeichnen sich durch eine schnelle Aushärtung, gute Chemikalien Beständigkeit, hohe Endhärte und hervorragende Filmoptik. Die Eigenschaften sind besser oder mindestens vergleichbar mit denen der Vergleichsbeispiele aus Tabelle 2, die als drei Komponenten System appliziert wurden. Die Zusammensetzungen der Vergleichsbeispiele härten ohne den Zusatz von Dodecylbenzolsulfonsäure nicht merklich aus.

## Patentansprüche

1. Zusammensetzungen, die auf sulfonatgruppenhaltigen Polyisocyanaten basieren und gleichzeitig Polyorthoester- und/oder Bicycloorthoestergruppen enthalten, die entweder in an diese sufonatgruppenhaltigen Polyisocyanate gebundener Form oder getrennt davon als Teil weiterer in den Zusammensetzungen enthaltener Verbindungen vorliegen.

2. Verfahren zur Herstellung von Zusammensetzungen gemäß Anspruch 1, bei dem zunächst
A) OH-funktionelle Polyorthoester durch Umsetzung von
A1) einem oder mehreren acyclischen Orthoestern mit
A2) niedermolekularen Polyolen einer Funktionalität von 4 bis 8 und einem zahlenmittleren Molekulargewicht von 80 bis 500 g/mol und
A3) gegebenenfalls einem 1,3 Diol und/oder einem Triol, wobei die Hydroxylgruppen durch mindestens 3 Kohlenstoffatome voneinander getrennt sind,
gegebenenfalls in Anwesenheit von
A4) Katalysatoren
hergestellt wird und diese dann entweder
B) mit mindestens einem sulfonatgruppenhaltigen Polyisocyanat umgesetzt werden oder
C) mit mindestens einem sulfonatgruppenfreien Polyisocyanat umgesetzt werden und das dabei entstehende Reaktionsgemisch anschließend mit mindestens einem sulfonatgruppenhaltigen Polyisocyanat vermischt wird.

3. Verfahren gemäß Anspruch 2, **dadurch gekennzeichnet, dass** Das Äquivalentverhältnis von umzuesternden Gruppen der Verbindungen der Komponente A1) zu den OH-Gruppen der Verbindungen der Komponenten A2) und A3) 1 : 1,3 bis 1 : 1,5 und das Äquivalentverhältnis von OH-Gruppen aus A2) zu denen aus A3) 1 : 0 bis 1 : 4 beträgt.

4. Verfahren gemäß Anspruch 2 oder 3, **dadurch gekennzeichnet, dass** die in B) bzw. C) eingesetzten sulfonatgruppenhaltigen und sulfonatgruppenfreien Polyisocyanate auf Hexamethylendiisocyanat, Isophorondiisocyanat und/oder 4,4'-Dicyclohexylmethandiisocyanat basieren.

5. Verfahren gemäß einem der Ansprüche 2 bis 4, **dadurch gekennzeichnet, dass** die sulfonatgruppenhaltigen Polyisocyanate in B) bzw. C) die Umsetzungsprodukte von Polyisocyanaten auf Hexamethylendiisocyanat-, Isophorondiisocyanat- und/oder 4,4'-Dicyclohexylmethandiisocyanat-Basis mit 2-(Cyclohexylamino)-ethansulfonsäure und/oder 3-(Cyclohexylamino)-propansulfonsäure sind.

6. Verfahren zur Herstellung erfindungsgemäßer Zusammensetzungen gemäß Anspruch 1, bei dem zunächst
a. Bicycloorthoester durch Umsetzung von
a1) einem oder mehreren acyclischen Orthoestern mit
a2) niedermolekularen Polyolen einer OH-Funktionalität von 3 oder 4 und einem zahlenmittleren Molekulargewicht von 80 - 500 g/mol
gegebenenfalls in Anwesenheit von
a3) Katalysatoren
hergestellt werden und diese dann entweder
b. mit mindestens einem sulfonatgruppenhaltigen Polyisocyanat umgesetzt oder vermischt werden oder
c. mit mindestens einem sulfonatgruppenfreien Polyisocyanat umgesetzt oder vermischt werden bevor sie mit mindestens einem sulfonatgruppenhaltigen Polyisocyanat vermischt werden.

7. Verfahren gemäß Anspruch 6, **dadurch gekennzeichnet, dass** das Äquivalentverhältnis von umzuesternden Gruppen der Verbindungen der Komponente a1) zu den OH-Gruppen der Verbindungen der Komponenten a2) 1 : 1 bis 1 : 1,5 beträgt.

8. Verfahren gemäß Anspruch 6 oder 7, **dadurch gekennzeichnet, dass** die in b) bzw. c) eingesetzten sulfonatgruppenhaltigen und sulfonatgruppenfreien Polyisocyanate auf Hexamethylendiisocyanat, Isophorondiisocyanat und/oder 4,4'-Dicyclohexylmethandiisocyanat basieren.

9. Verfahren gemäß einem der Ansprüche 6 bis 8, **dadurch gekennzeichnet, dass** die sulfonatgruppenhaltigen Polyisocyanate in b) bzw. c) die Umsetzungsprodukte von Polyisocyanaten auf Hexamethylendiisocyanat-, Isophorondiisocyanat- und/oder 4,4'-Dicyclohexylmethandiisocyanat-Basis mit 2-(Cyclohexylamino)-ethansulfonsäure und/oder 3-(Cyclohexylamino)-propansulfonsäure sind.

10. Verwendung von Zusammensetzungen gemäß Anspruch 1 bei der Herstellung von Polyurethanen.

11. Beschichtungen, Klebstoffe und Dichtmassen erhältlich unter Verwendung von Zusammmensetzungen gemäß Anspruch 1.

12. Substrate beschichtet oder verklebt mit Beschichtungen bzw. Klebstoffen gemäß Anspruch 11.

## Claims

1. Compositions based on sulfonate-group-containing polyisocyanates and at the same time comprising polyorthoester and/or bicyclo-orthoester groups which are present either in a form bonded to the sulfonate-group-containing polyisocyanates or separate therefrom as part of further compounds present in the compositions.

2. Process for the preparation of compositions according to claim 1, in which
A) OH-functional polyorthoesters are first prepared by reaction of
A1) one or more acyclic orthoesters with
A2) low molecular weight polyols having a functionality of from 4 to 8 and a number-average molecular weight of from 80 to 500 g/mol and
A3) optionally a 1,3-diol and/or a triol, wherein the hydroxyl groups are separated from one another by at least 3 carbon atoms,
optionally in the presence of
A4) catalysts,
which polyorthoesters are then either
B) reacted with at least one sulfonate-group-containing polyisocyanate or
C) reacted with at least one sulfonate-group-free polyisocyanate, and the reaction mixture formed thereby is then mixed with at least one sulfonate-group-containing polyisocyanate.

3. Process according to claim 2, **characterised in that** the equivalent ratio of groups to be transesterified in the compounds of component A1) to the OH groups of the compounds of components A2) and A3) is from 1:1.3 to 1:1.5 and the equivalent ratio of OH groups from A2) to those from A3) is from 1:0 to 1:4.

4. Process according to claim 2 or 3, **characterised in that** the sulfonate-group-containing and sulfonate-group-free polyisocyanates used in B) and/or C) are based on hexamethylene diisocyanate, isophorone diisocyanate and/or 4,4'-dicyclohexylmethane diisocyanate.

5. Process according to any one of claims 2 to 4, **characterised in that** the sulfonate-group-containing polyisocyanates in B) and C) are the reaction products of polyisocyanates based on hexamethylene diisocyanate, isophorone diisocyanate and/or 4,4'-dicyclohexylmethane diisocyanate with 2-(cyclohexylamino)-ethanesulfonic acid and/or 3-(cyclohexylamino)-propanesulfonic acid.

6. Process for the preparation of compositions of the invention according to claim 1, in which
a. bicyclo-orthoesters are first prepared by reaction of
a1) one or more acyclic orthoesters with
a2) low molecular weight polyols having an OH functionality of 3 or 4 and a number-average molecular weight of from 80 to 500 g/mol,
optionally in the presence of
a3) catalysts,
which bicyclo-orthoesters are then either
b. reacted or mixed with at least one sulfonate-group-containing polyisocyanate or
c. reacted or mixed with at least one sulfonate-group-free polyisocyanate before being mixed with at least one sulfonate-group-containing polyisocyanate.

7. Process according to claim 6, **characterised in that** the equivalent ratio of groups to be transesterified in the compounds of component a1) to the OH groups of the compounds of component a2) is from 1:1 to 1:1.5.

8. Process according to claim 6 or 7, **characterised in that** the sulfonate-group-containing and sulfonate-group-free polyisocyanates used in b) and/or c) are based on hexamethylene diisocyanate, isophorone diisocyanate and/or 4,4'-dicyclohexylmethane diisocyanate.

9. Process according to any one of claims 6 to 8, **characterised in that** the sulfonate-group-containing polyisocyanates in b) and c) are the reaction products of polyisocyanates based on hexamethylene diisocyanate, isophorone diisocyanate and/or 4,4'-dicyclohexylmethane diisocyanate with 2-(cyclohexylamino)-ethanesulfonic acid and/or 3-(cyclohexylamino)-propanesulfonic acid.

10. Use of compositions according to claim 1 in the preparation of polyurethanes.

11. Coatings, adhesives and sealing compositions obtainable using compositions according to claim 1.

12. Substrates coated or bonded with coatings or adhesives according to claim 11.

## Revendications

1. Compositions qui sont à base de polyisocyanates comprenant des groupes sulfonates et qui contiennent simultanément des groupes polyorthoesters et/ou bicycloorthoesters, qui sont présents soit dans une forme liée à ces polyisocyanates comprenant des groupes sulfonates, soit séparés de ceux-ci comme partie d'autres composés contenus dans les compositions.

2. Procédé pour la préparation de compositions selon la revendication 1, dans lequel on prépare dans un premier temps
A) des polyorthoesters OH-fonctionnels par réaction
A1) d'un ou plusieurs orthoesters acycliques avec
A2) des polyols de faible poids moléculaire d'une fonctionnalité de 4 à 8 et d'un poids moléculaire moyen en nombre de 80 à 500 g/mol et
A3) éventuellement d'un 1,3 diol et/ou d'un triol, les groupes hydroxyles étant séparés les uns des autres par au moins trois atomes de carbone,
éventuellement en présence
A4) de catalyseurs
et soit on les fait alors réagir
B) avec au moins un polyisocyanate contenant des groupes sulfonates soit
C) on les fait réagir avec au moins un polyisocyanate exempt de groupes sulfonates et on mélange le mélange réactionnel ce faisant produit ensuite avec au moins un polyisocyanate contenant des groupes sulfonates.

3. Procédé selon la revendication 2, **caractérisé en ce que** le rapport d'équivalents des groupes à transestérifier des composés du constituant A1) par rapport aux groupes OH des composés des constituants A2) et A3) est de 1 : 1,3 à 1 : 1,5 et le rapport d'équivalent des groupes OH de A2) à ceux de A3) est de 1 : 0 à 1 : 4.

4. Procédé selon la revendication 2 ou 3, **caractérisé en ce que** les polyisocyanates contenant des groupes sulfonates et exempts de groupes sulfonates utilisés dans B), respectivement C) sont à base de diisocyanate d'hexaméthylène, de diisocyanate d'isophorone et/ou de diisocyanate de 4,4'-dicyclohexylméthane.

5. Procédé selon l'une quelconque des revendications 2 à 4, **caractérisé en ce que** les polyisocyanates contenant des groupes sulfonates dans B) respectivement C) sont les produits de réaction de polyisocyanates à base de diisocyanate d'hexaméthylène, de diisocyanate d'isophorone et/ou de diisocyanate de 4,4'-dicyclohexylméthane avec de l'acide 2-(cyclohexylamino)-éthanesulfonique et/ou de l'acide 3-(cyclohexylamino)-propanesulfonique.

6. Procédé pour la préparation de compositions selon l'invention selon la revendication 1, dans lequel on prépare dans un premier temps
a. des bicycloorthoesters par réaction
a1) d'un ou plusieurs orthoesters acycliques avec
a2) des polyols de faible poids moléculaire d'une fonctionnalité OH de 3 ou 4 et d'un poids moléculaire moyen en nombre de 80-500 g/mol
éventuellement en présence
a3) de catalyseurs
et soit on les fait alors réagir ou on les mélange
b. avec au moins un polyisocyanate contenant des groupes sulfonates, soit
c. on les fait réagir ou on les mélange avec au moins un polyisocyanate exempt de groupes sulfonates avant qu'ils soient mélangés avec un polyisocyanate contenant des groupes sulfonates.

7. Procédé selon la revendication 6, **caractérisé en ce que** le rapport d'équivalents des groupes à transestérifier des composés des constituants a1) aux groupes OH des composés des constituants a2) est de 1 : 1 à 1 : 1,5.

8. Procédé selon la revendication 6 ou 7, **caractérisé en ce que** les polyisocyanates contenant des groupes sulfonates et exempts de groupes sulfonates utilisés dans b) respectivement c) sont à base de diisocyanate d'hexaméthylène, de diisocyanate d'isophorone et/ou de diisocyanate de 4,4'-dicyclohexylméthane.

9. Procédé selon l'une quelconque des revendications 6 à 8, **caractérisé en ce que** les polyisocyanates contenant des groupes sulfonates dans b) respectivement c) sont les produits de réaction de polyisocyanates à base de diisocyanate d'hexaméthylène, de diisocyanate d'isophorone et/ou de diisocyanate de 4,4'-dicyclohexylméthane avec de l'acide 2-(cyclohexylamino)-éthanesulfonique et/ou de l'acide 3-(cyclohexylamino)-propanesulfonique.

10. Utilisation de compositions selon la revendication 1 dans la préparation de polyuréthanes.

11. Revêtements, adhésifs et matières d'étanchéité obtenus en utilisant les compositions selon la revendication 1.

12. Substrats revêtus ou collés avec des revêtements respectivement des adhésifs selon la revendication 11.
